# EUROPÄISCHE PATENTSCHRIFT

(11) **EP 0 538 579 B1**
(45) Veröffentlichungstag und Bekanntmachung des Hinweises auf die Patenterteilung: **10.05.1995**
(21) Anmeldenummer: 92114030.7
(22) Anmeldetag: 18.08.1992
(51) Int. Cl.: C05F 17/02

(54) **Vorrichtung zur Herstellung von Kompost**
Compost container
Récipient pour la préparation de compost

(30) Priorität: 24.08.1991 DE 4128189
(43) Veröffentlichungstag der Anmeldung: 28.04.1993
(73) Patentinhaber: AL-KO Geräte GmbH, D-89359 Kötz (DE)
(72) Erfinder: Kreutner, Andreas, A-6130 Schwarz (Tirol) (AT)
(74) Vertreter: Munk, Ludwig, Dipl.-Ing.

(56) Entgegenhaltungen:
- EP-A- 386 568
- DE-A- 3 019 253
- DE-C- 3 430 761
- GB-A- 970 757
- US-A- 4 108 609

## Beschreibung

Die Erfindung betrifft eine Vorrichtung zur Herstellung von Kompost aus Haushalts- und/oder Gartenabfällen mit einem glockenförmigen, nach unten konisch sich erweiternden Behälter, der eine obere, durch einen Deckel verschließbare Einwurföffnung aufweist, aus dem im Bereich seiner Unterseite Kompost entnehmbar ist und der im Bereich der Innenseite seiner umlaufenden Wandung mit von unten nach oben verlaufenden, nach innen offenen Kanälen versehen ist, über die der Behälterinhalt belüftbar ist.

Eine Vorrichtung dieser Art ist aus der DE 34 30 761 C1 bekannt. Bei dieser bekannten Anordnung werden die Kanäle durch über die Behälterhöhe durchgehende Profilrillen der Behälterwände gebildet. Die Kanäle sind hierbei auf der ganzen Behälterhohe mittels der zwischen ihnen verlaufenden Wandbereiche voneinander getrennt.

Der Behälterinnenraum kommuniziert über die obere Einwurföffnung, die durch einen zugeordneten Deckel verschließbar ist, mit der Umgebung.

Aus EP 0 386 568 A1 ergibt sich eine Mülltonne, in welcher ein aerober Abbau kompostierfähiger Abfälle in Gang kommen soll, um das Aufnahmevermögen zu steigern. Die Innenseite der umlaufenden Wandung der am oberen Ende durch einen Deckel verschließbaren Mülltonne ist dabei mit von unten nach oben durchgehenden, nach innen vorspringenden Stegen versehen, durch die von unten nach oben durchgehende, nach innen offene Kanäle begrenzt werden. Die bekannte Mülltonne ist mit einem Zwischenboden versehen, der eine untere Kammer begrenzt, die über im Bereich eines Kanals angeordnete Belüftungsöffnungen mit der Umgebung kommuniziert und als Luftverteilerkammer fungieren kann. Im Bereich des Deckels und des oberen Endes des die Belüftungsöffnungen enthaltenden Kanals sind auch Entlüftungsöffnungen vorgesehen. Die im Bereich der Verteilerkammer mit Luft beaufschlagbaren Kanäle sind auf ihrer ganzen Länge durch die über die ganze Tonnenhöhe durchgehenden Stege von einander getrennt.

Die bekannte Mülltonne erfordert eine Tonnenleerung über die obere, durch den Deckel verschließbare Öffnung.

Hiervon ausgehend ist es daher die Aufgabe der vorliegenden Erfindung, eine Vorrichtung gattungsgemäßer Art unter Vermeidung ihrer Nachteile und Beibehaltung ihrer Vorteile so zu verbessern, daß eine hohe Funktionssicherheit erreicht wird.

Diese Aufgabe wird erfindungsgemäß dadurch gelöst, daß die Innenseite der umlaufenden Wandung des Behälters, der eine untere, durch eine Klappe verschließbare Entnahmeöffnung aufweist und über untere Wandausnehmungen, von denen eine die Entnahmeöffnung ist, belüftbar und deckelseitig entlüftbar ist, mit stehenden, nach innen vorspringenden, die Kanäle, denen jeweils wenigstens eine untere Belüftungsöffnung zugeordnet ist, begrenzenden Stegen versehen ist, die zumindest teilweise in höhenmäßig übereinander sich befindende Stegabschnitte unterteilt sind, die seitlich um den halben Stegabstand gegeneinander versetzt sind.

Mit diesen Maßnahmen werden die Nachteile der bekannten Anordnungen unter Beibehaltung ihrer Vorteile beseitigt. Da sämtliche Kanäle zuverläßig be- und entlüftet werden, kann sich auf dem gesamten Behälterinnenumfang eine Luftströmung ausbilden, die nicht nur eine gute Belüftung des Behälterinhalts, sondern auch eine gute Isolationswirkung ergibt. Hinzu kommt, daß infolge des seitlichen Versatzes der Stegabschnitte gegeneinander versetzte Kanalabschnitte gebildet werden, wobei jeder mittlere Kanalabschnitt mit jeweils zwei darunter bzw. darüber sich befindenden Kanalabschnitten kommunizieren kann. Hierdurch ist auch für den Fall eine gute Luftverteilung sichergestellt, daß in einem ungünstigen Fall an einer stelle der Kanalquerschnitt versperrt wird.

Vorteilhafte Ausgestaltungen und zweckmäßige Fortbildungen der übergeordneten Maßnahmen sind in den Unteransprüchen angegeben.

In zweckmäßiger Weiterbildung der Erfindung kann der Behälter über der Höhe in mehrere Sektionen unterteilt sein, deren Höhe jeweils der Länge eines zugeordneten Stegabschnitts entspricht. Diese Maßnahmen ermöglichen eine Bauform mit vergleichsweise großem Fassungsvermögen und ergeben dennoch eine einfache Herstellung und Handhabung. Ein weiterer Vorteil ist darin zu sehen, daß die Sektionen ineinandergestapelt werden können, was für den Transport und die Lagerhaltung eine hohe Kompaktheit gewährleistet.

Zweckmäßig besitzen der Behälter und dementsprechend auch seine Sektionen einen nach unten sich erweiternden Querschnitt. Hierdurch wird die Ineinanderstapelung der Sektionen erleichtert. Zudem ergeben diese Maßnahmen den weiteren Vorteil, daß das im Behälter zusammensinkende Verrottungsmaterial von den Wandungen wegwandert, wodurch die obengeschilderten Vorteile des übergeordneten Gedankens noch verstärkt werden.

In weiterer Fortbildung der übergeordneten Maßnahmen können zumindest den außerhalb der Entnahmeöffnung vorgesehenen Kanälen als Längsschlitze ausgebildete Belüftungsöffnungen zugeordnet sein, die zweckmäßig bezüglich des zugeordneten Kanals außermittig angeordnet sind. diese Maßnahmen ergeben eine besonders zuverlässige Luftbeaufschlagung im Bereich des gesamten Behälterumfangs und eine besonders gute Luftverteilung.

Eine weitere zweckmäßige Maßnahme kann darin bestehen, daß die der Entnahmeöffnung zugeordnete Klappe und vor allem der der Entlüftungsöffnung zugeordnete Deckel zumindest auf einem Teil des Umfangs vom jeweils zugeordneten Öffnungsrand beabstandet ist bzw. sind. Hierdurch ist eine automatische Luftzu- bzw. -abfuhr über den automatisch sich ergebenden Spalt gewährleistet. Vorteilhaft kann dabei zumindest der Schwenkachse des Deckels ein Lagerbock mit mehreren, höhenmäßig gegeneinander versetzten Lagerstellen zugeordnet sein. Diese Maßnahme ermöglicht in vorteilhafter Weise eine Regulierung der Entlüftung und damit der Luftzirkulation. Es ist daher in vorteilhafter Weise möglich, beispielsweise im Sommer einen größeren Spalt einzustellen als bei niedrigeren Temperaturen im Winter.

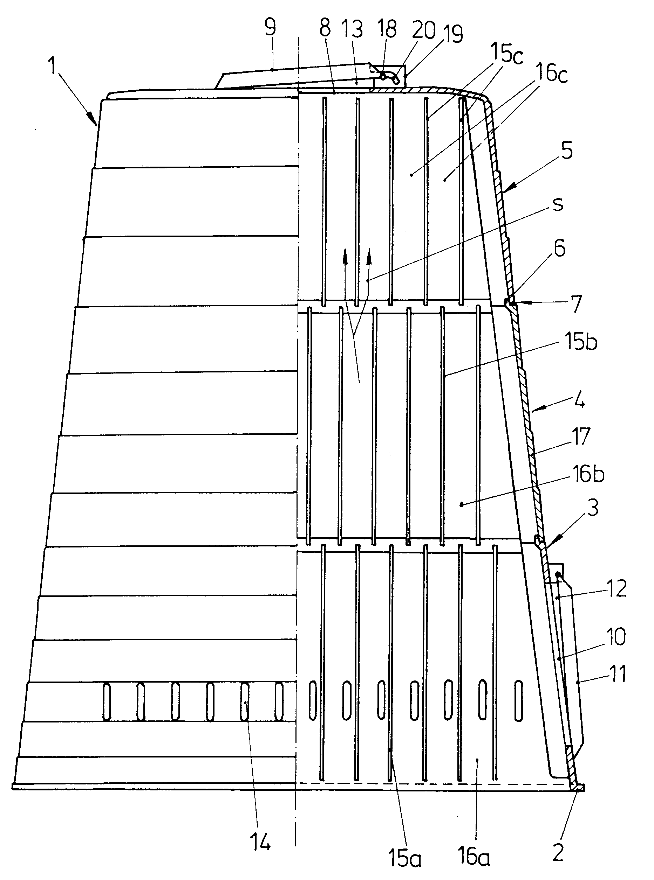

Weitere vorteilhafte Ausgestaltungen und zweckmäßige Fortbildungen der übergeordneten Maßnahmen ergeben sich aus der nachstehenden Beschreibung eines bevorzugten Ausführungsbeispiels anhand der Zeichnung in Verbindung mit den restlichen Unteransprüchen.

Die einzige Figur der Zeichnung zeigt eine Ansicht eines erfindungsgemäßen Kleinkomposters teilweise im Schnitt.

Der in der Zeichnung dargestellte Gartenkomposter besteht aus einem glockenförmigen, bodenseitig offenen Kunststoffbehälter 1, der mit seinem an seinem unteren Rand vorgesehenen Standflansch 2 auf Garten- oder Wiesenboden aufgestellt werden kann, so daß Verrottungsorganismen von unten in den Behälterinnenraum einwandern können.Der Behälter 1 ist über der Höhe in mehrere, hier drei aufeinander aufgesetzte Sektionen 3, 4, 5 unterteilt. Die mit dem Standflansch 2 versehene, untere Sektion 3 und die mittlere Sektion 4 sind ringförmig ausgebildet. Die den oberen Abschluß bildende Sektion 5 ist haubenförmig ausgebildet. Die aufeinander aufgesetzten Sektionen befinden sich in gegenseitigem, formschlüssigem Steckeingriff. Hierzu greift im Stoßbereich jeweils der ebene Rand einer Sektion in eine durch einen Innenflansch 6 begrenzte Nut 7 der anschließenden Sektion ein. Der Behälter 1 und dementsprechend seine Sektionen 3, 4, 5 besitzen eine nach unten sich erweiternde Konfiguration, so daß die Sektionen 3, 4, 5 für Lagerung und Transport ineinandergestapelt werden können. Zudem erleichtert diese Konfiguration die Herstellung als Gußformling, beispielsweise als aus Recycling-Kunststoff herstellbarer Spritzgußformling. Außerdem wird durch die konische Form erreicht, daß das im Behälterinnenraum zusammensinkende Material von den Behälterwandungen weggeführt wird. Der Querschnitt des Behälters 1 kann kreisförmig sein. Dem dargestellten Ausführungsbeispiel liegt eine abgerundete Ecken aufweisende, quadratische Querschnittsform zugrunde. Dies ergibt ebene Seitenflanken, was die Anbringung von Klappen etc. erleichtert.

Die obere Sektion 5 ist im Bereich ihrer den Behälterinnenraum übergreifenden Decke mit einer Einwurföffnung 8 versehen, die durch einen Schwenkdeckel 9 verschließbar ist. Die untere Sektion 3 ist mit einer umfangsseitigen Entnahmeöffnung 10 versehen, die durch eine Schwenkklappe 11 verschließbar ist. Der Deckel 9 und die Klappe 11 liegen nicht mit ihrem ganzen Umfang am zugeordneten Öffnungsrand an, so daß über den dadurch gebildeten Spalt 12 bzw. 13 Luft ein- bzw. austreten kann. Um eine Belüftung auf dem ganzen Behälterumfang zu gewährleisten, ist die untere Sektion 3 außerhalb der Entnahmeöffnung 10 mit im Bereich des unteren Behälterrands angeordneten Längsschlitzen 14 versehen. Diese sind gleichmäßig auf die Breite der klappenlosen Seitenwände und der die Entnahmeöffnung 10 seitlich flankierenden Wandbereiche verteilt.

Im Bereich der Innenseite der ebenen Behälterwandungen sind gleichmäßig über die Breite verteilte, nach innen vorspringende, stehend angeordnete Stege 15 vorgesehen. Diese sind so voneinander beabstandet, daß sich schlanke, von unten nach oben verlaufende Kanäle 16 von 3cm bis 8cm, vorzugsweise 5cm Breite, ergeben. Im Bereich der Entnahmeöffnung 10 sind die Stege 15 unterbrochen. Die an die Entnahmeöffnung 10 nach oben anschließenden Kanäle 16 werden über die Entnahmeöffnung 10 mit Luft versorgt. Den übrigen Kanälen 16 ist jeweils ein Längsschlitz 14 zugeordnet. Die nach innen vorspringenden Stege 15 fungieren als Abstandhalter, die die Behälterfüllung von der Behälterwandung 17 weghalten, so daß die nach innen offenen Kanäle 16 freibleiben. In diesen kann sich daher eine der Belüftung des Behälterinhalts sowie der Wärmeisolation des Behälterinhalts dienende Luftströmung ausbilden. Die Abstandshalterfunktion der Stege 15 wird durch die nach unten sich erweiternde Konfiguration des Behälters unterstützt.

Die Unterteilung des Behälters 1 in aufeinander aufgesetzte Sektionen ergibt auch eine Unterteilung der Stege 15 in den Sektionen 3, 4, 5 entsprechende Abschnitte 15a, 15b, 15c. Dasselbe gilt für die Kanäle 16, die sich in Abschnitte 16a, 16b und 16c unterteilen. Die übereinander sich befindenden Stegabschnitte 15a, 15b, 15c der übereinander sich befindenden Sektionen des Behälters 1 sind seitlich um den halben Stegabstand gegeneinander versetzt. Dementsprechend sind auch die übereinander sich befindenden Kanalabschnitte 16a, 16b, 16c um die halbe Kanalbreite egeneinander versetzt, so daß jeder Kanalabschnitt in zwei darunter oder darüber sich befindende Kanalabschnitte übergeht, was eine gute, zuverlässige Luftverteilung gewährleistet, wie durch die Strömungspfeile s angedeutet ist. Aus demselben Grunde sind auch die Längsschlitze 14 bezüglich des jeweils zugeordneten Kanals außermittig angeordnet. Die Längsschlitze 14 befinden sich dementsprechend neben einem jeweils zugeordneten Stegabschnitt 15a.

Der Deckel 9 und die Klappe 11 liegen, wie oben schon erwähnt, zur Bildung der Spalte 12, 13 nicht voll auf dem jeweils zugeordneten Öffnungrand auf. Um den Luftdurchsatz regulieren zu können, ist die lichte Weite des deckelseitigen Spalts 13 verstellbar. Hierzu ist der Schwenkachse 18 des Deckels 9 ein Lagerbock 19 mit mehreren, höhenmäßig gegeneinander versetzten Lagerstellen zugeordnet. Der Lagerbock 19 wird durch zwei den Deckel 9 flankierende Laschen gebildet, die mit die Schwenkachse 18 bildenden, seitlich vorstehenden Lagerzapfen des Deckels 9 zugeordneten Lagerausnehmungen 20 versehen sind. Diese sind als gekrümmte Längsschlitze ausgebildet, deren unteres Ende die tiefere Lagerstelle bildet. Für die höhere Lagerstelle ist eine Kerbe vorgesehen. Im Bereich der der Entnahmeöffnung 10 zugeordneten Klappe 11 ist hier eine stationäre Lagerung vorgesehen. Es wäre aber auch hier eine verstellbare Lagerung denkbar. Der Deckel 9 und die Klappe 11 übergreifen den jeweils zugeordneten Öffnungrand, wodurch Regenwasser etc. abgeleitet wird. Dies wird durch die gewölbte Ausführung der Decke der haubenförmigen Sektion 5 noch unterstützt.

Die Stege 15a, 15b, 15c können an die jeweils zugeordnete Behälterwandung angeformt sein. Es wäre aber auch denkbar, die Stege 15a, 15b, 15c nachträglich anzusetzen.

Der Behälter 1 wird über die Einfüllöffnung 8 von Hand mit Haus- und/oder Gartenabfällen, insbesondere in gehäckseltem Zustand, befüllt. Das eingefüllte Material macht einen aeroben Verrottungsprozeß durch, der durch die besonders günstige Belüftung bereits nach vergleichsweise kurzer Zeit abgeschlossen ist. Der entstandene Kompost kann über die Entnahmeöffnung 10 per Schaufel entnommen werden. Selbstverständlich ist auch eine kontinuierliche Betriebsweise möglich, indem neues Material eingeworfen und verrottetes Material portionsweise entnommen wird. In manchen Fällen kann es sich auch als zweckmäßig erweisen, den ganzen Behälter 1 umzusetzen. Auch dies wird durch die Stege erleichtert, die einen großflächigen Wandkontakt der Behälterfüllung verhindern.

## Patentansprüche

1. Vorrichtung zur Herstellung von Kompost aus Haushalt- und/oder Gartenabfällen mit einem glockenförmigen, nach unten konisch sich erweiternden Behälter (1), der eine obere, durch einen Deckel (99) verschließbare Einwurföffnung (8) aufweist, aus dem im Bereich seiner Unterseite Kompost entnehmbar ist und der im Bereich der Innenseite seiner umlaufenden Wandung mit von unten nach oben verlaufenden, nach innen offenen Kanälen (16a,b,c) versehen ist, über die der Behälterinhalt belüftbar ist, **dadurch gekennzeichnet, daß** die Innenseite der umlaufenden Wandung des Behälters (1), der eine untere durch eine Klappe (11) verschließbare Entnahmeöffnung (10) aufweist und über untere Wandausnehmungen, von denen eine die Entnahmeöffnung (10) ist, belüftbar und deckelseitig entlüftbar ist, mit stehenden, nach innen vorspringenden, die Kanäle (16a,b,c), denen jeweils wenigstens eine untere Belüftungsöffnung (14,10) zugeordnet ist, begrenzenden Stegen (15a,b,c) versehen ist, die zumindest teilweise in höhenmäßig übereinander sich befindende Stegabschnitte (15a bzw. 15b bzw. 15c) unterteilt sind, die seitlich um den halben Stegabstand gegeneinander versetzt sind.

2. Vorrichtung nach Anspruch 1, **dadurch gekennzeichnet, daß** der Behälter (1) über seiner Höhe in mehrere Sektionen (3,4,5) unterteilt ist, wobei die Höhe jeder Sektion (3,4,5) der Länge einesjeweils zugeordneten Stegabschnitts (15a,b,c,) entspricht.

3. Vorrichtung nach Anspruch 2, **dadurch gekennzeichnet, daß** die Sektionen (3,4,5) mit ihrem unteren Rand formschlüssig in eine umlaufende, durch einen Innenflansch begrenzte Nut (7) der jeweils darunter sich befindenden Sektion eingreifen.

4. Vorrichtung nach einem der vorhergehenden Ansprüche, **dadurch gekennzeichnet, daß** der Behälter (1) einen abgerundete Ecken aufweisenden, quadratischen Querschnitt aufweist.

5. Vorrichtung nach einem der vorhergehenden Ansprüche, **dadurch gekennzeichnet, daß** zumindest den außerhalb der Entnahmeöffnung (10) vorgesehenen Kanälen (16a) als Längsschlitze ausgebildete Belüftungsöffnungen (14) zugeordnet sind, die vorzugsweise bezüglich des jeweils zugeordneten Kanals (16a) außermittig angeordnet sind.

6. Vorrichtung nach einem der vorhergehenden Ansprüche, **dadurch gekennzeichnet, daß** die der Entnahmeöffnung (10) zugeordnete Klappe (11) zumindest auf einem Teil ihres Umfangs vom zugeordneten Öffnungsrand beabstandet ist.

7. Vorrichtung nach einem der vorhergehenden Anspürche, **dadurch gekennzeichnet, daß** der der Einwurföffnung (8) zugeordnete Deckel (9) zumindest auf einem Teil seines Umfangs vom zugeordneten Öffnungsrand beabstandet ist.

8. Vorrichtung nach Anspruch 7, **dadurch gekennzeichnet, daß** der Schwenkachse (18) des Deckels (9) ein Lagerbock (19) mit mehreren, höhenmäßig gegeneinander versetzten Lagerstellen zugeordnet ist.

9. Vorrichtung nach einem der vorhergehenden Ansprüche, **dadurch gekennzeichnet, daß** der Behälter (1) als, vorzugsweise aus Recycling-Material bestehender, Kunststofformling ausgebildet ist.

10. Vorrichtung nach einem der vorhergehenden Ansprüche, **dadurch gekennzeichnet, daß** die Stege (15) an den Behälter (1) angeformt sind.

## Claims

1. Device for the production of compost from household and/or garden rubbish, with a bell-shaped downwardly conically widening container (1), which possesses a top insertion opening (8) closable by a lid (9), [and] from which compost can be removed at the bottom and which is provided in the region of the interior of its surrounding wall with inwardly open channels (16a, b, c) extending from the bottom to the top, through which the contents of the container can be ventilated, characterized in that the interior of the surrounding wall of the container (1), which possesses a bottom removal opening (10) closable by a trap (11) and which can be ventilated by air entering via lower wall-ports (of which the removal opening (10) is one) and escaping at the top, is provided with vertical inwardly projecting fins (15a, b, c) forming the boundaries of the channels (16a, b, c) to each of which at least one lower ventilation opening (14, 10) is assigned, at least some of the said fins being divided into superimposed sections (15a, 15b, 15c, respectively) which are laterally offset by half the pitch of the fins with respect to one another.

2. Device according to Claim 1, characterized in that the container (1) is vertically divided into a number of sections (3, 4, 5), with the height of each section (3, 4, 5) equal to the length of the corresponding fin section (15a, b, c).

3. Device according to Claim 2, characterized in that the sections (3, 4, 5) engage by their lower rim, in a form-fitting manner, in a peripheral groove (7), bounded by an internal flange, on the section below.

4. Device according to one of the preceding claims, characterized in that the container (1) has a square cross-section, with rounded corners.

5. Device according to one of the preceding claims, characterized in that ventilation openings (14) in the form of extended slots are provided at least in the channels (16a) other than those at the removal opening (10) and are preferably arranged off-centre with respect to the individual channel (16a) in which they are located.

6. Device according to one of the preceding claims, characterized in that there is a gap between the trap (11) fitted to the removal opening (10) and the rim of the opening, at least over part of its periphery.

7. Device according to one of the preceding claims, characterized in that there is a gap between the lid (9) fitted to the insertion opening (8) and the rim of the opening, at least over part of its periphery.

8. Device according to Claim 7, characterized in that the hinge pin (18) of the lid (9) is carried by a bearing bracket (19) with a number of different height settings.

9. Device according to one of the preceding claims, characterized in that the container (1) is formed as a plastic moulding, preferably consisting of recycling material.

10. Device according to one of the preceding claims, characterized in that the fins (15) are moulded on the container (1).

## Revendications

1. Dispositif pour la fabrication de compost à partir de déchets ménagers et/ou de jardins, comprenant un réceptacle (1) en forme de cloche s'élargissant de manière conique vers le bas, qui présente une ouverture d'alimentation (8) qui peut être fermée par un couvercle (99), à partir duquel on peut retirer du compost dans la zone de son côté inférieur et qui est muni, dans la zone du côté interne de sa paroi périphérique, de canaux (16a, b, c) ouverts vers l'intérieur et s'étendant de bas en haut, à l'intervention desquels le contenu du réceptacle peut être aéré, caractérisé en ce que le côté interne de la paroi périphérique du réceptacle (1) présente une première ouverture inférieure de prélèvement (10) qui peut être fermée par un clapet (11) et qui peut être aérée à l'intervention d'évidements inférieurs pratiqués dans la paroi, dont l'un constitue l'ouverture de prélèvement (10), et qui peut être désaéré côté couvercle, qui est muni de nervures (15a, b, c) verticales faisant saillie vers l'intérieur et délimitant les canaux (16a, b, c) auxquels est chaque fois attribuée au moins une ouverture d'aération inférieure (14, 10), les nervures étant subdivisées au moins partiellement en sections de nervures (15a, respectivement 15b, respectivement 15c) superposées en hauteur, qui sont décalées latéralement l'une par rapport à l'autre sur une distance correspondant à la moitié de la distance séparant les nervures.

2. Dispositif selon la revendication 1, caractérisé en ce que le réceptacle (1) est subdivisé, sur sa hauteur, en plusieurs sections (3, 4, 5), la hauteur de chaque section (3, 4, 5) correspondant à la longueur de chacune des sections de nervures (15a, b, c) qui leur sont respectivement attribuées.

3. Dispositif selon la revendication 2, caractérisé en ce que les sections (3, 4, 5) viennent s'engrener mécaniquement avec leur bord inférieur dans une rainure périphérique (7) délimitée par une bride interne, de la section se trouvant respectivement en dessous.

4. Dispositif selon l'une quelconque des revendications précédentes, caractérisé en ce que le réceptacle (1) présente une section transversale carrée présentant des coins arrondis.

5. Dispositif selon l'une quelconque des revendications précédentes, caractérisé en ce qu'au moins aux canaux (16a) prévus à l'extérieur de l'ouverture de prélèvement (10), sont attribuées des ouvertures d'aération (14) réalisées en fentes longitudinales, qui sont disposées excentriquement par rapport au canal (16a) qui leur est respectivement attribué.

6. Dispositif selon l'une quelconque des revendications précédentes, caractérisé en ce que le clapet (11) attribué à l'ouverture de prélèvement (10) est écarté du bord d'ouverture correspondant, au moins sur une partie de sa périphérie.

7. Dispositif selon l'une quelconque des revendications précédentes, caractérisé en ce que le couvercle (9) attribué à l'ouverture d'alimentation (8) est écarté du bord d'ouverture correspondant, au moins sur une partie de sa périphérie.

8. Dispositif selon la revendication 7, caractérisé en ce que, à l'axe de pivotement (18) du couvercle (9), est attribué un palier (19) muni de plusieurs points d'appui décalés mutuellement en hauteur.

9. Dispositif selon l'une quelconque des revendications précédentes, caractérisé en ce que le réceptacle (1) est réalisé en une matière moulée en matière synthétique constituée de préférence d'un matériau recyclable.

10. Dispositif selon l'une quelconque des revendications précédentes, caractérisé en ce que les nervures (15) sont façonnées contre le réceptacle (1).
